# EUROPÄISCHE PATENTSCHRIFT

(11) **EP 0 865 949 B1**
(45) Veröffentlichungstag und Bekanntmachung des Hinweises auf die Patenterteilung: **16.10.2002**
(21) Anmeldenummer: 97121819.3
(22) Anmeldetag: 11.12.1997
(51) Int. Cl.: B60J 7/057, E05F 15/14

(54) **Antriebsvorrichtung für ein verstellbares Teil eines Fahrzeuges**
Driving device for movable member of a vehicle
Dispositif d'entraînement pour élément mobile de véhicule

(30) Priorität: 22.03.1997 DE 19712185
(43) Veröffentlichungstag der Anmeldung: 23.09.1998
(73) Patentinhaber: ROBERT BOSCH GMBH, 70442 Stuttgart (DE)
(72) Erfinder: Steuer, Peter, 76131 Karlsruhe (DE); Haussecker, Walter, 77830 Bühlertal (DE); Heitz, Robert, 77830 Bühlertal (DE); Dreier, Friedrich-Wilhelm, 76547 Sinzheim (DE)

(56) Entgegenhaltungen:
- EP-A- 0 469 286
- DE-C- 4 323 945
- DE-C- 4 403 574

## Beschreibung

### Stand der Technik

Die Erfindung geht aus von einer Antriebsvorrichtung nach der Gattung des Hauptanspruchs, wie z.B. aus der DE-C-44 03 574 bekannt. Aus der DE-C-43 23 945 ist weiterhin eine Antriebsvorrichtung bekannt, wobei in einem Gehäuse eine Welle mit einem Schneckenrad und einem Zahnrad angeordnet ist, das mit einem weiteren Zahnrad kämmt, das drehfest auf einer weiteren Welle gelagert ist und das Antriebsrad für ein Exzentergetriebe bildet, welches aus einem Exzenter besteht, der ein Innenrad zu einer Taumelbewegung gegenüber einem Außenrad veranlaßt. Das Innenrad weist - wie in dem o.g. gattungsbildenden Dokument - Aussparungen auf, in die ein gehäusefester Führungsbolzen greift, welcher zur federnden Abstützung des (zweiten) Zahnrads in axialer Richtung dient.

Außerdem ist schon eine weitere Antriebsvorrichtung bekannt (EP 0 469 286 B1), bei der zwischen dem Antriebsrad des Untersetzungsgetriebes und dem Exzenterzahnradgetriebe ein Gehäuseteil angeordnet ist, um daran den Führungsbolzen für das Innenrad anzuordnen.

### Vorteile der Erfindung

Die erfindungsgemäße Antriebsvorrichtung mit den kennzeichnenden Merkmalen des Hauptanspruchs hat demgegenüber den Vorteil einer auf einfache Art und Weise kompakten klein- bzw. niedrigbauenden Ausgestaltung.

Erfindungsgemäß wird am Innenrad wenigstens einen in Richtung der Welle vom Außenrad fortlaufenden Führungsbolzen angeordnet, der in eine an einem Deckel der Antriebsvorrichtung vorgesehene radiale Führungsnut eingreift, wodurch ohne Vergrößerung der Bauhöhe die Drehfixierung des Innenrades erreicht wird.

Durch die in den Unteransprüchen aufgeführten Maßnahmen sind vorteilhafte Weiterbildungen und Verbesserungen der im Hauptanspruch angegebenen Antriebsvorrichtung möglich. Vorteilhaft ist es, daß der Zahnkranzring des Außenrades an seiner dem Antriebsrad abgewandten Stirnfläche offen ist, so daß das eingesetzte Innenrad jederzeit zugänglich ist.

Vorteilhaft ist es ebenfalls, das Außenrad auf einer Radnabe des Antriebsrades zu lagern, wodurch die Bauhöhe verringert wird.

Vorteilhaft ist es zusätzlich, am Exzenter eine Rastnase vorzusehen, die in eine Rastnut der Welle eingreift und so bei der Montage eine axiale Fixierung der einzelnen auf die Welle gesteckten Elemente ermöglicht.

### Zeichnung

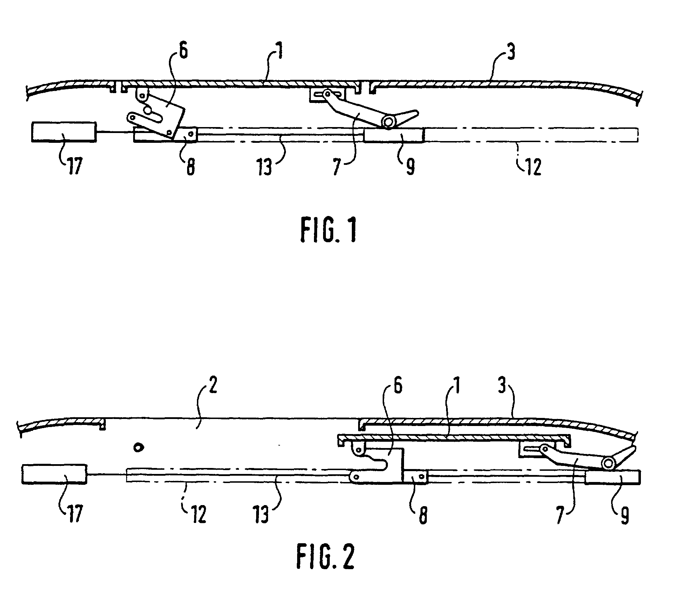

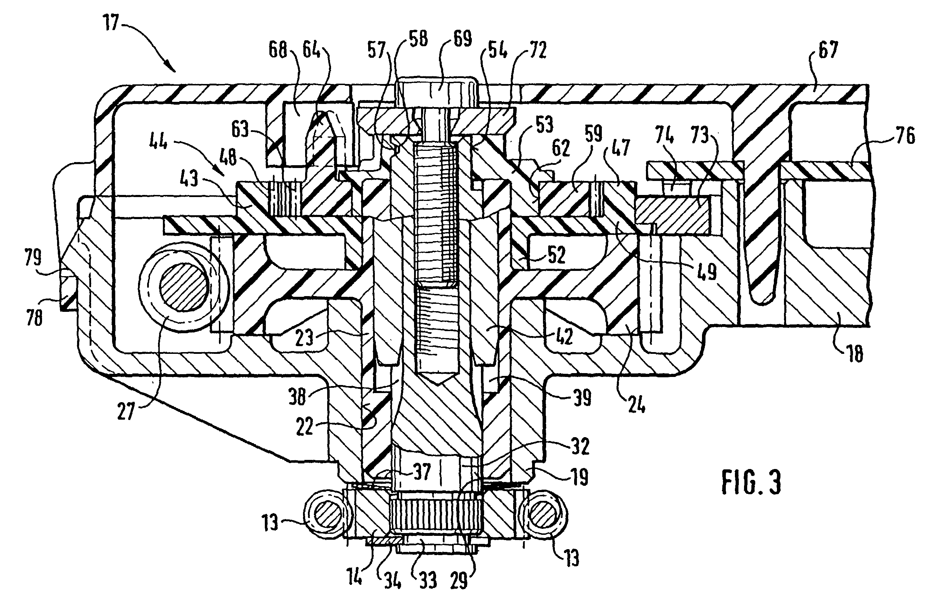

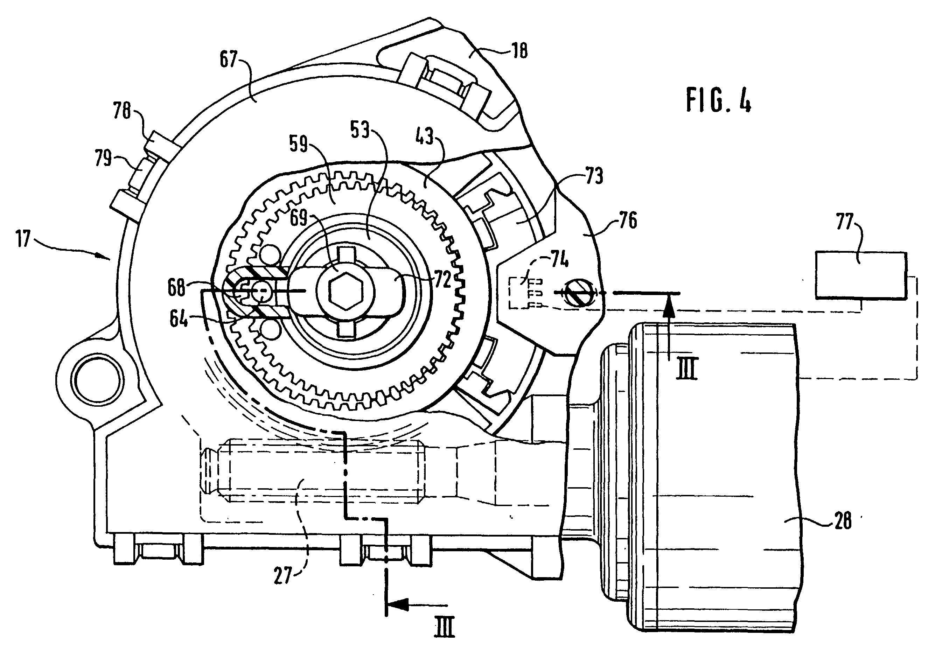

Ein Ausführungsbeispiel der Erfindung ist in der Zeichnung vereinfacht dargestellt und in der nachfolgenden Beschreibung näher erläutert. Es zeigen Figur 1 und 2 einen schematischen Längsschnitt eines Fahrzeug-Schiebedaches mit sich in Schließstellung und in Offenstellung befindlicher Dachplatte, Figur 3 einen Schnitt durch eine erfindungsgemäß ausgebildete Antriebsvorrichtung entlang der Linie III-III in Figur 4, Figur 4 eine Draufsicht auf eine Antriebsvorrichtung gemäß Figur 3 in teilweise aufgeschnittenem Zustand.

### Beschreibung des Ausführungsbeispieles

In den Figuren 1 und 2 ist ein Fahrzeug-Schiebedach gezeigt, bei dem eine Dachplatte 1 in Figur 1 in Schließstellung gezeigt ist und in Figur 2 eine Dachöffnung 2 einer festen Dachfläche 3 öffnet. Die Dachplatte 1 wird durch einen vorderen Träger 6 und einen hinteren Träger 7 geführt. Die Träger 6 bzw. 7 sind an einem vorderen Schlitten 8 bzw. einem hinteren Schlitten 9 schwenkbar befestigt. Der vordere Schlitten 8 und der hintere Schlitten 9 sind in einer strichpunktiert dargestellten Längsführung 12 an der Dachfläche 3 in Fahrzeuglängsrichtung verschiebbar. Am rechten bzw. dem linken hinteren Schlitten 9 greift jeweils ein Antriebskabel 13 an, das beispielsweise als ein Gewindekabel ausgebildet ist. In die Antriebskabel 13 greift ein in der Figur 3 gezeigtes Ritzel 14 ein, das Teil einer in den Figuren 3 und 4 gezeigten Antriebsvorrichtung 17 ist.

Die Antriebsvorrichtung 17 weist ein Grundgehäuseteil 18 auf, das in einem Lagerdom 19 eine Lageröffnung 22 hat, in der eine Radnabe 23 eines als Schneckenrad ausgebildeten Antriebsrades 24 drehbar gelagert ist. Das Antriebsrad 24 ist innerhalb des Grundgehäuseteils 18 angeordnet und Teil eines Untersetzungsgetriebes, dessen anderes Teil durch eine Schnecke 27 gebildet wird, die in die Zähne des Antriebsrades 24 eingreift und durch einen in Figur 4 gezeigten Elektromotor 28 angetrieben wird. In einer die Radnabe 23 axial durchdringenden Durchgangsöffnung 29 des Antriebsrades 24 ist eine Welle 32 gelagert, die aus dem Lagerdom 19 mit ihrem einen Ende herausragt und dort beispielsweise eine Rändelung aufweist, auf die das Ritzel 14 aufgepreßt ist, so daß zwischen dem Ritzel 14 und der Welle 32 eine drehfeste Verbindung vorliegt. Dem Lagerdom 19 abgewandt weist die Welle 32 eine Sicherungsnut 33 auf, in die eine Sicherungsscheibe 34 in Form eines Sprengringes eingreift, während andererseits des Ritzels 14 zwischen dem Ritzel 14 und dem Lagerdom 19 eine Federscheibe 37 angeordnet ist, die bestrebt ist, auf das Ritzel 14 und damit auf die Welle 32 eine Kraft in axialer Richtung von dem Lagerdom 19 weg auszuüben. Die Welle 32 hat wenigstens eine Längsnut 38 am Umfang und das Antriebsrad 24 wenigstens eine zur Durchgangsöffnung 29 hin offene Längsnut 39, so daß ein in die Längsnut 38 der Welle 32 und in die Längsnut 39 des Antriebsrades 24 eingreifender Mitnehmer 42 das Antriebsrad 24 und die Welle 32 drehfest miteinander koppelt.

Die Radnabe 23 des Antriebsrades 24 erstreckt sich beiderseits des den Zahnkranz des Antriebsrades tragenden Radkörpers. Dem Lagerdom 19 abgewandt ist unmittelbar und direkt anschließend an das Antriebsrad 24 konzentrisch zur Welle 32 ein Außenrad 43 gelagert, das zu einem Exzenterzahnradgetriebe 44 gehört. Zwischen Außenrad 43 und Antriebsrad 24 befindet sich also kein weiteres Teil. Das Außenrad 43 hat einen Zahnkranzring 47 mit einer zur Welle 32 hin weisenden Innenverzahnung 48. Der Zahnkranzring 47 ist an seiner dem Antriebsrad 24 abgewandten Stirnfläche offen, während an der dem Antriebsrad 24 zugewandten Stirnfläche des Zahnkranzringes 47 ein scheibenförmiger Radkörper 49 ausgebildet ist, der sich radial nach innen bis zu einer Außenradnabe 52 erstreckt, die beispielsweise das dem Ritzel 14 abgewandte Ende der Radnabe 23 des Antriebsrades 24 umgreift und darauf das Außenrad 43 konzentrisch zur Welle 42 und drehbar gegenüber dem Antriebsrad 24 lagert. Auf das dem Ritzel 14 abgewandte Ende der Welle 32 ist ein Exzenter 53 aufgesetzt, der in den Zahnkranzring 47 des Außenrades 43 ragt und mittels einer eine Verdrehsicherung bildenden Abflachung 54 drehfest mit der Welle 32 verbunden ist. Beim Aufschieben des Exzenters 53 auf die Welle 32 rastet eine am Exzenter 53 in Richtung zur Welle 32 hin gerichtete Rastnase 57 in eine Rastnut der Welle ein und dient so der vorläufigen axialen Sicherung. Außer dem Außenrad 43 und dem Exzenter 53 gehört zum Exzenterzahnradgetriebe 44 ein Innenrad 59, das auf einer Exzentergleitfläche 62 innerhalb des Zahnkranzringes 47 des Außenrades 43 drehbar gelagert ist und eine Außenverzahnung 63 hat, die wenigstens einen Zahn weniger als die Innenverzahnung 48 des Außenrades 43 hat und mit dieser kämmt. Außenrad 43, Exzenter 53 und Innenrad 59 sind beispielsweise aus Kunststoff gefertigt und in Richtung der Welle 32 möglichst kurzbauend ineinander gefügt. An dem Innenrad 59 ist wenigstens ein in Richtung der Welle 32 vom Außenrad 43 fortlaufender Führungsbolzen 64 angeordnet, der in eine an einem am Grundgehäuseteil 18 anliegenden Deckel 67 der Antriebsvorrichtung 17 vorgesehene Führungsnut 68 eingreift. Die Führungsnut 68 wird beispielsweise durch Wandungen des Deckels 67 gebildet und ist in radialer Richtung zur Welle 32 hin ausgerichtet. Durch das Vorsehen von mehreren in Umfangsrichtung des Innenrades 59 mit Abstand zueinander angeordneten Führungsbolzen kann bei der Montage des Innenrades 59 leichter die von der Lage des Exzenters 53 abhängige Stellung des Innenrades 59 zugeordnet werden. Zur axialen Lagesicherung ist in das dem Ritzel 14 abgewandte Ende der Welle 32 eine Schraube 69 eingeschraubt, die mittels einer Haltescheibe 72 die axiale Lagesicherung der einzelnen Getriebeelemente an der Welle 32 bewirkt. Das Außenrad 43 trägt am Umfang mindestens einen einen Schaltkörper bildenden Dauermagneten 73, der bei bestimmten Drehstellungen des Außenrades 43 mit einem am Grundgehäuseteil 18 befestigten magnetfeldempfindlichen Sensor 74, beispielsweise einem Hallgeber, zusammenwirkt. Dabei ist der eine Schalteinrichtung bildende magnetfeldempfindliche Sensor 74 beispielsweise mittels einer Leiterplatte 76 zwischen dem Grundgehäuseteil 18 und dem Deckel 67 gelagert. Der magnetempfindliche Sensor 74 gibt über die elektrischen Leiter der Leiterplatte 76 ein Steuersignal an eine den Elektromotor 28 steuernde Elektronikbaugruppe 77. Zur Fixierung aneinander übergreifen Rastösen 78 des Deckels 67 an verschiedenen Stellen Rastvorsprünge 79 des Grundgehäuseteils 18.

Zur Betätigung der Dachplatte 1 wird über das aus dem Antriebsrad 24 und der Schnecke 27 gebildete Untersetzungsgetriebe durch den Elektromotor 28 das Ritzel 14 angetrieben. Mit der drehfest mit dem Antriebsrad 24 verbundenen Welle 32 führt auch der drehfest mit der Antriebswelle 32 verbundene Exzenter 53 eine Rotationsbewegung aus, die das an einer Verdrehung gehinderte Innenrad 59 zu einer hin- und hergehenden, taumelnden Bewegung im Außenrad 43 veranlaßt, durch die das Außenrad 43 eine von dem Verhältnis der Zähnezahlen zwischen Innenrad 59 und Außenrad 43 abhängende untersetzte Verdrehung ausführt. Gelangt bei dieser Umdrehung des Außenrades 43 von weniger als 360° der wenigstens eine am Außenrad befestigte Dauermagnet 73 in den Meßbereich des magnetfeldempfindlichen Sensors 74, so ist eine der Endstellungen der Dachplatte 1 erreicht und das von dem magnetfeldempfindlichen Sensor 54 bewirkte Steuersignal veranlaßt über die Elektronikbaugruppe 77 das Ausschalten des Elektromotors 28.

Die geschilderte Antriebsvorrichtung 17 ist nicht nur geeignet zum Einsatz bei Fahrzeug-Schiebedächern, sondern sie kann in gleicher Weise zur Betätigung anderer Teile im Fahrzeug dienen, wie Klappen für Lüftungskanäle, Fensterheber, Sitzverstellungen und anderes.

## Patentansprüche

1. Antriebsvorrichtung für ein zwischen Endstellungen verstellbares Teil (1) eines Fahrzeuges, insbesondere für eine Dachplatte (1) eines Fahrzeugdaches,
- mit einem mittels eines Elektromotors (28) betätigtem Untersetzungsgetriebe (24, 27), das ein auf einer Welle (32) drehfest angeordnetes Antriebsrad (24) aufweist,
- mit einem Exzenterzahnradgetriebe (44), das ein Außenrad (43) mit einer zu der gemeinsamen Welle (32) von Untersetzungs (24, 27)- und Exzenterzahnradgetriebe (44) koaxialen Innenverzahnung (48) und ein damit im Kämmeingriff stehendes außenverzahntes Innenrad (59), sowie ein mit der Welle (32) drehfest verbundenen Exzenter (53) aufweist,
- mit einer den Elektromotor steuernden Schalteinrichtung (74), die ein mit dem Außenrad (43) drehfest verbundenen Schaltkörper (73) zum Betätigen der Schalteinrichtung (74) aufweist,
- und ausgehend von dem Antriebsrad (24) zunächst das Außenrad (43) und daran axial anschließend das Innenrad (59) gelagert ist,
- **dadurch gekennzeichnet, daß** am Innenrad (59) wenigstens ein in Richtung der Welle (32) vom Außenrad (43) fortlaufender Führungsbolzen (64) angeordnet ist, der in eine an einem Deckel (67) der Antriebsvorrichtung (17) vorgesehene radiale Führungsnut (68) eingreift.

2. Antriebsvorrichtung nach Anspruch 1, **dadurch gekennzeichnet, daß** das Außenrad (43) einen innenverzahnten Zahnkranzring (47) aufweist, der an seiner dem Antriebsrad (24) abgewandten Stirnfläche offen ist.

3. Antriebsvorrichtung nach Anspruch 1, **dadurch gekennzeichnet, daß** das Außenrad (43) auf einer Radnabe (23) des Antriebsrades (24) gelagert ist.

4. Antriebsvorrichtung nach Anspruch 1, **dadurch gekennzeichnet, daß** am Exzenter (53) eine Rastnase (57) vorgesehen ist, die in eine Rastnut (58) der Welle (32) eingreift.

5. Antriebsvorrichtung nach Anspruch 1, **dadurch gekennzeichnet, daß**, das Innenrad (59) mindestens einen Zahn weniger aufweist, als die Innenverzahnung (48) des Außenrads (43).

6. Antriebsvorrichtung nach Anspruch 1, **dadurch gekennzeichnet, daß** der Schaltkörper (73) der Schalteinrichtung (74) beim Verstellen des Teiles (1) zwischen seinen Endstellungen über das Exzenterzahnradgetriebe (44) zu einer Drehbewegung von weniger als 360° veranlaßt wird.

7. Antriebsvorrichtung nach Anspruch 1, **dadurch gekennzeichnet, daß** die Schalteinrichtung (74) den Elektromotor (28) in einer vorbestimmten Stellung, insbesondere in einer Endstellung, des Teils(1) stillsetzt.

8. Antriebsvorrichtung nach Anspruch 1, **dadurch gekennzeichnet, daß** das Außenrad (43) mindestens einen Dauermagneten (73) trägt, der mit einem magnetfeldempfindlichen Sensor (74) zusammenwirkt.

9. Antriebsvorrichtung nach Anspruch 1, **dadurch gekennzeichnet, daß** an einem Ende der Welle (32) zur axialen Lagesicherung der Getriebeelemente (24, 43, 53, 59) eine Haltescheibe (72) mit einer Schraube (69) angeordnet ist.

## Claims

1. Driving device for a part (1) of a vehicle which can be adjusted between end positions, in particular for a roof panel (1) of a vehicle roof,
- having a step-down gear (24, 27) which is actuated by means of an electric motor (28) and has a driving wheel (24) arranged in a rotationally fixed manner on a shaft (32),
- having an eccentric toothed gear (44) which has an outer wheel (43) having an internal toothing (48) coaxial with the common shaft (32) of the step-down gear (24, 27) and the eccentric toothed gear (44), and an externally toothed inner wheel (59) which is in meshing engagement with the said outer wheel, and an eccentric (53) which is connected in a rotationally fixed manner to the shaft (32),
- having a switching device (74) which controls the electric motor and has a switching body (73) which is connected in a rotationally fixed manner to the outer wheel (43) and is intended for actuating the switching device (74),
- and starting from the driving wheel (24), the outer wheel (43) is mounted first and the inner wheel (59) adjoins it axially,
- **characterized in that** at least one guide bolt (64) continuing from the outer wheel (43) in the direction of the shaft (32) is arranged on the inner wheel (59), the said guide bolt engaging in a radial guide groove (68) provided on a cover (67) of the driving device (17).

2. Driving device according to Claim 1, **characterized in that** the outer wheel (43) has an internally toothed gear rim ring (47) which is open on its end surface facing away from the driving wheel (24).

3. Driving device according to Claim 1, **characterized in that** the outer wheel (43) is mounted on a wheel hub (23) of the driving wheel (24).

4. Driving device according to Claim 1, **characterized in that** a latching lug (57) is provided on the eccentric (53), the said latching lug engaging in a latching groove (58) of the shaft (32).

5. Driving device according to Claim 1, **characterized in that**, the inner wheel (59) has at least one tooth less than the inner toothing (48) of the outer wheel (43).

6. Driving device according to Claim 1, **characterized in that**, during the adjustment of the part (1) between its end positions, the switching body (73) of the switching device (74) is set into a rotating movement of less than 360° by the eccentric toothed gear (44).

7. Driving device according to Claim 1, **characterized in that** the switching device (74) shuts down the electric motor (28) in a predetermined position, in particular in an end position, of the part (1).

8. Driving device according to Claim 1, **characterized in that** the outer wheel (43) bears at least one permanent magnet (73) which interacts with a magnetic-field-sensitive sensor (74).

9. Driving device according to Claim 1, **characterized in that** a retaining washer (72) together with a screw (69) is arranged at one end of the shaft (32) in order to axially secure the position of the gear elements (24, 43, 53, 59).

## Revendications

1. Dispositif d'entraînement pour une pièce (1) d'un véhicule, notamment un panneau de toit (1) d'un toit de véhicule entre des positions de fin de course, comprenant :
- un réducteur (24, 27) actionné par un moteur électrique (28), ce réducteur ayant une roue d'entraînement (24) solidaire en rotation d'un arbre (32),
- une transmission à roue dentée à excentrique (44) ayant une roue extérieure (43) avec une denture intérieure (48) coaxiale à l'arbre commun (32) du réducteur (24, 27) et de la transmission à roue dentée à excentrique (44), et une roue intérieure (59) à denture extérieure engrenant avec cette denture intérieure, ainsi qu'un excentrique (53) solidaire en rotation de l'arbre (32),
- une installation de commutation (74) commandant le moteur électrique, cette installation ayant un organe de commutation (73) relié solidairement en rotation à la roue extérieure (43) pour actionner l'installation de commutation (74),
- et partant de la roue d'entraînement (24), tout d'abord la roue extérieure (43) et de façon adjacente à celle-ci la roue intérieure (59),
**caractérisé en ce que**
la roue intérieure (59) comporte au moins un goujon de guidage (64) se poursuivant en direction de l'arbre (32) à partir de la roue extérieure (43), et ce goujon de guidage pénètre dans une rainure de guidage (68) radiale prévue sur le couvercle (67) du dispositif d'entraînement (17).

2. Dispositif d'entraînement selon la revendication 1,
**caractérisé en ce que**
la roue extérieure (43) comporte une couronne dentée (47) à denture intérieure dont la surface frontale à l'opposé de la roue d'entraînement (24) est ouverte.

3. Dispositif selon la revendication 1,
**caractérisé en ce que**
la roue extérieure (43) est montée sur un moyeu (23) de la roue d'entraînement (24).

4. Dispositif selon la revendication 1,
**caractérisé en ce que**
l'excentrique (53) comporte un bec d'accrochage (57) qui pénètre dans une rainure d'accrochage (58) de l'arbre (32).

5. Dispositif selon la revendication 1,
**caractérisé en ce que**
la roue intérieure (59) comporte au moins une dent de moins que la denture intérieure (48) de la roue extérieure (43).

6. Dispositif selon la revendication 1,
**caractérisé en ce que**
l'organe de commutation (73) de l'installation de commutation (74), lors du déplacement de la pièce (1) entre ses deux positions de fin de course, est commandé par la transmission à roue dentée à excentrique (44) pour effectuer un mouvement de rotation inférieur à 360°.

7. Dispositif selon la revendication 1,
**caractérisé en ce que**
l'installation de commutation (74) arrête le moteur électrique (28) dans une position prédéterminée notamment une position de fin de course de la pièce (1).

8. Dispositif selon la revendication 1,
**caractérisé en ce que**
la roue extérieure (43) porte au moins un aimant permanent (73) coopérant avec un capteur magnétosensible (74).

9. Dispositif selon la revendication 1,
**caractérisé en ce qu'**
une extrémité de l'arbre (32) comporte une rondelle de fixation (72) avec une vis (69) pour bloquer la position axiale des éléments de transmission (24, 43, 53, 59).
